(19) Europäisches Patentamt
European Patent Office
Office européen des brevets

(11) **EP 0 960 145 B1**

(12) **EUROPEAN PATENT SPECIFICATION**

(45) Date of publication and mention
of the grant of the patent:
**04.06.2003 Bulletin 2003/23**

(21) Application number: **98959278.7**

(22) Date of filing: **15.12.1998**

(51) Int Cl.7: **C08F 265/06**

(86) International application number:
**PCT/KR98/00429**

(87) International publication number:
**WO 99/031154 (24.06.1999 Gazette 1999/25)**

(54) **WEATHER RESISTANT RESIN COMPOSITION AND PREPARATION METHOD THEREOF**

WETTERBESTÄNDIGE HARZZUSAMMENSETZUNG UND VERFAHREN ZU IHRER HERSTELLUNG

COMPOSITION DE RESINE RESISTANT AUX INTEMPERIES ET SON PROCEDE DE PREPARATION

(84) Designated Contracting States:
**CH DE FR LI**

(30) Priority: **16.12.1997  KR 9769061**

(43) Date of publication of application:
**01.12.1999  Bulletin 1999/48**

(73) Proprietor: **LG CHEMICAL LIMITED**
**Seoul 150-721 (KR)**

(72) Inventors:
• **SHIN, Yang-hyun**
  **Yocheon-city, Cheollanam-do 555-050 (KR)**
• **YOO, Keun-hoon**
  **Yusong-ku, Taejeon-city 305-755 (KR)**
• **RYOO, Seung-cheol**
  **Yocheon-city, Cheollanam-do 555-280 (KR)**
• **LEE, Chan-hong**
  **Yusong-ku, Taejeon-city 305-345 (KR)**

(74) Representative:
**Weber, Thomas, Dr.Dipl.-Chem. et al**
**Patentanwälte**
**von Kreisler-Selting-Werner,**
**Postfach 10 22 41**
**50462 Köln (DE)**

(56) References cited:
GB-A- 1 124 911        US-A- 3 691 260
US-A- 3 830 878        US-A- 4 108 946
US-A- 4 442 263        US-A- 5 120 788

Description

## BACKGROUND OF THE INVENTION

### (a) Field of the Invention

The present invention relates to a weather resistant resin having superior qualities of coagulation, drying, impact resistant property and high mobility and a process for preparing the same.

### (b) Description of the Related Art

Generally, acrylonitrile butadiene styrene (ABS) resin is widely used for electric appliance's housing, cars, and the like because of its superior properties of balance, coloring and processibility, however, it is not suitable for outdoor applications due to its poor weather and light resistant property. The ABS resin also has a poor heat stability, weak chemical resistant property, and high degradation property.

Acrylate styrene acrylonitrile (ASA) resin is also widely used and, as opposed to ABS resin, it has a good heat stability, weather and chemical resistant property. However, there is a problem of producing much foam when polymerized and coagulated ASA resin has a tendacy to form, and after coagulation ASA resin has the further problem of caking. Its decreased drying efficiency due to a high water content of its particles makes it difficult to dry and results in having a weak impact strength. Furthermore, because of a low mobility and the appearance of pearl color, its processing is limited.

The related references of the process for preparing the ASA resin are disclosed by JP Publication Nos. Hei 5-202264 and Hei4-180949. JP Publication No. Hei 5-202264 describes the process of enhancing the properties of ASA resin by producing a bimodal type of the resin. The process comprises the step of preparing an ASA resin latex having a particle size of from 50 to 200 nanometer and another ASA resin having a particle size of from 200 to 1000 nanometer, and then blending these latex to form a latex mixture followed by blending the mixture with styrene acrylonitrile (SAN) copolymer that is produced separately. But this process has drawbacks in that the process of separately producing two ASA resins having different particle sizes is complicated and the resulting ASA resin has a low impact strength. Similarly, German Patent Application No. 1 260 135 A1 also discloses in detail the process described by JP Publication No. Hei 5-202264.

JP Publication No. Hei 4-180949 describes a process of manufacturing an ASA resin by producing multilayer graft copolymer particles. First, a hard core is produced by using a monomer having a high glass transition temperature, then a crosslinked core is produced on the hard core from a butyl acrylate and a crosslinking agent. Next, crosslinked shell is produced from acrylonitrile monomer, crosslinking agent and a styrene monomer also having a high glass transition temperature, and then a soft shell is produced from an uncrosslinked styrene monomer and the acrylonitrile monomer. However, similar to other conventional methods, this process has the same problem of not efficiently reducing water content inside the particles and consequently results in producing ASA resins having a low impact strength.

## SUMMARY OF THE INVENTION

In view of the foregoing, it is an object of the present invention to efficiently reduce water content of particles in ASA resin and to enhance impact strength of the same.

This object has been achieved by a process of preparing acrylate styrene acrylonitrile(ASA) resin containing monomers, aromatic vinyl compounds and cyanized vinyl compounds in an amount of from 30 to 50, from 30 to 60 and from 10 to 20 parts by weight respectively, based on total composition of ASA resins in an amount of 100 parts by weight comprising the steps of:

   a) preparing alkyl acrylate rubber polymers by simultaneously copolymerizing alkyl acrylate monomer, methyl methacrylate(MMA) and acrylonitrile(AN) in an amount of from 30 to 50, from 0.1 to 4 and from 0.1 to 6 parts by weight respectively, based on total composition of the ASA resin in an amount of 100 parts by weight; and
   b) grafting aromatic vinyl compounds and cyanized vinyl compounds to alkyl acrylate rubber polymers in an amount of from 40 to 60 parts by weight respectively, based on total composition of the ASA resin in an amount of 100 parts by weight.

The invention further relates to a composition of ASA resins obtainable by the process described above.

Preferred embodiments become evident from the dependent, claims.

In a preferred embodiment the present invention provides a process for preparing the particles of butyl acrylate rubber polymer having large surface area by efficiently copolymerizing butyl acrylate monomer, methyl methacrylate

(MMA) and acrylonitrile (AN) in an amount of from 30 to 50, from 0.1 to 4.0 and from 0.1 to 6.0 parts by weight respectively, based on the total monomer of 100 parts by weight. An emulsifier usable in the process of this invention is a metal salt of alkyl sulfosuccinate having 12-20 carbon atoms, an alkyl sulfuric acid ester having 12-20 carbon atoms or a sulfuric acid metal salt in an amount of from 0.2 to 1.0 parts by weight, based on the total monomer of 100 parts by weight. In the grafting process of this invention, as an aromatic vinyl compound and a cyanized vinyl compound is used in an amount of from 40 to 60 and from 10 to 20 parts by weight respectively, based on the total monomer of 100 parts by weight, and a rosinic acid metal salt or a carboxylic metal salt is used as an emulsifier in an amount of from 0:5 to 3.0 parts.by weight, based on the total monomer of 100 parts by weight. The drying process and impact strength of the ASA resin are improved by efficiently reducing water content in ASA particles.

## DETAILED DESCRIPTION OF THE INVENTION

The preferred process according to the present invention will now be described in detail.

A preferred monomer used is a butyl acrylate when a crosslinked butyl acrylate rubber polymer is produced in the process of this invention. The preferred amount of the butyl acrylate is in an amount of from 30 to 50 parts by weight, based on the total monomer of 100 parts by weight. Preferred additional monomers that are used for improving the efficiency of rubber particle and pearl color are (meth ) acrylic acid ester compounds in an amount of from 0.1 to 4.0 parts by weight and vinyl compounds in an amount of from 0.1 to 6.0 parts by weight, based on the total monomer of 100 parts by weight. A functional monomer may alternatively be a copolymerized functional monomer.

The (meth ) acrylic acid ester compound usable in this process can be selected from such materials including (meth ) acrylic acid methyl ester, (meth ) acrylic acid ethyl ester, (meth) acrylic acid propyl ester, (meth ) acrylic acid 2-ethyl hexyl ester, (meth ) acrylic acid decyl ester, (meth ) acrylic acid lauryl ester, and the like, preferably methyl methacrylate.

The vinyl compound usable in this process can be selected from such materials including styrene, alpha methyl styrene, p-methyl styrene, acrylonitrile vinyl derivatives, preferably styrene, and the preferred vinyl cyanide compound is acrylonitrile.

The functional monomer that may be used in this process can be selected from such materials including methacrylic acid, acrylic acid, maleic acid, itaconic acid, fumaric acid, and the like.

An emulsifer that is used in this process on producing the crosslinked butyl acrylate rubber polymer can be selected from such materials including alkyl sulfosuccinate metal salt derivatives having 12-18 carbon atoms and alkyl sulfuric acid ester or sulfonic acid metal salt derivatives having 12-20 carbon atoms. The alkyl sulfosuccinate metal salt derivatives having 12-18 carbon atoms are for example sodium or potassium dicyclohexyl sulfosuccinate, dihexyl sulfosuccinate, di 2-ethyl hexyl sulfosuccinate or dioctyl sulfosuccinate, and the like. The alkyl sulfuric acid ester or sulfonic acid metal salt derivatives having 12-20 carbon atoms are for example alkyl sulfate metal salts such as sodium lauryl sulfate, sodium dodecyl sulfate, sodium dodecyl benzene sulfate, sodium octadecyl sulfate, sodium oleic sulfate, potassium dodecyl sulfate and potassium octadecyl sulfate. Among them the dioctyl sulfosuccinate sodium or the potassium salt is particularly preferred considering foam appearance, drying characteristic and grafting reaction of SAN phase with the crosslinked butyl acrylate rubber polymer.

When a carboxylic acid metal salt derivative having a pH value of 9-13 in aqueous solution such as aliphatic acid metal salt or rosinic acid metal salt having 12-20 carbon atoms is used, the drying process is improved because it reduces the water content of the ASA resin. But there is a disadvantage of peeling off by phase separation which makes it difficult to graft the SAN resin to butyl acrylate rubber polymer, resulting in having ASA resin of reduced impact strength.

An initiator that is used in this process can be selected from either a water-soluble or oil-soluble initiator. The initiator is, for example such water-soluble initiator as potassium persulfate, sodium persulfate, ammonium persulfate, and the like and such oil-soluble initiator as cumene hydroperoxide, benzoyl peroxide, and the like. The amount of the polymer initiator used is preferably in an amount of from 0.05 to 0.2 parts by weight, based on the total monomer of 100 parts by weight.

A preferred grafting agent usable in the process of this invention is such materials including allyl methacrylate (AMA), triaryl isocyanolate (TAIC), triaryl amine (TAA), and the like and the amount of the grafting agent is preferably from 0.01 to 0.07 parts by weight, based on the total monomer of 100 parts by weight.

A crosslinking agents usable in the process of this invention is such materials including ethylene glycol dimethacrylate, diethylene glycol dimethacrylate, triethylene glycol dimethacrylate, 1,3-butanediol dimethacrylate, 1,6-hexanediol dimethacrylate, neopentyl glycol dimethacrylate, trimethylol propane trimethacrylate, trimethylol methane triacrylate, and the like and an amount of the crosslinking agents is preferably from 0.05 to 0.3 parts by weight, based on the total monomer of100 parts by weight.

An electrolyte usable in the process of this invention is $NaHCO_3$, $Na_2S_2O_7$, $K_2CO_3$, and the like, among them $NaHCO_3$ is particularly preferred and an amount of the electrolytes is from 0.05 to 0.4 parts by weight, based on the total monomer of 100 parts by weight.

Reaction can be only an emulsion polymerization or a mixed polymerization of emulsion and non-emulsion polymerization, and the addition method of monomer can be a continuous addition method or a mixed method of a continuous addition and a batch addition method.

After polymerizing, a pH range of a latex of a crosslinked butyl acrylate rubber polymer is from 5 to 9, preferably from 6 to 8.

A particle size of polymerized rubber polymers is preferably from 250-500 nm (2500 to 5000 Å), more preferably from 300-450 nm (3000 to 4500 Å).

A major monomer of a reaction grafting the SAN resin to the crosslinked butyl acrylate rubber polymer is aromatic vinyl compounds in an amount of from 30 to 60 parts by weight and cyanized vinyl compounds in an amount of from 10 to 20 parts by weight, based on the total monomer of 100 parts by weight, and optionally (meth) acrylic acid ester compound is copolymerized with the functional monomer.

The aromatic vinyl compound usable in the process of this invention is such styrene monomer derivatives as styrene, alpha-methyl styrene, p-methyl styrene, and the like, particularly preferably styrene. The cyanized vinyl compound is preferably acrylonitrile.

The copolymerizable (meth) acrylic acid ester compound usable in this process can be selected from such materials including (meth) acrylic acid methyl ester, (meth) acrylic acid ethyl ester, (meth) acrylic acid propyl ester, (meth) acrylic acid 2-ethyl hexyl ester, (meth) acrylic acid decyl ester, (meth) acrylic acid lauryl ester, and the like, perferably methyl methacrylate.

The copolymerizable functional monomer usable in this process can be selected from such materials including methacrylic acid, acrylic acid, maleic acid, itaconic acid fumaric acid, and the like.

An emulsifer that is used in this process is preferably such carboxylic metal salts as aliphatic metal salts having a pH value of 9-13 in aqueous solution and 12-20 carbon atoms, rosinic acid metal salts, and the like, and the aliphatic metal salt is for example sodium or potassium fattic acid, laurylate and olate, and rosinic acid metal salts are for example sodium or potassium acid rosinate.

When alkyl aromatic acid metal salt derivatives such as aliphatic acid metal salts having 12-20 carbon atoms having the pH value of 9-13 in aqueous solution or rosinic acid metal salts, and the like are used, carboxylic group of butyl acrylate rubber polymer having a, low glass transition temperature tend to goes out as the pH of total system increases, but it is possible that the hydrophobic SAN phase having a high glass transition temperature coagulates under atmospheric pressure, because the SAN phase goes into the particles of the butyl acrylate rubber polymer as polymerization is processed. And because the water content in the ASA particles tends to reduce substantially, drying can be easily achieved.

On the contrary, as an emulsifier the sulfosuccinate metal salts having the pH value of 3-9 and 12-18 carbon atoms, the sulfuric acid esters having 12-20 carbon atoms or sulfuric acid metal salts which is more preferable for grafting, but such emulsifier has disadvantages as follows. Because of a high surface glass transition temperature coagulation is impossible under atmospheric pressure, the water content in the produced ASA particles is high, there is hydrogen bond between water and carboxylic group of butyl acrylate, and because the particles of the ASA resin are surrounded by more hydrophobic SAN on surface, it is very hard for water to go out of the particles. With this reason, the sulfosuccinate metal salts having the pH of 3-9 and 12-18 carbon atoms, a sulfuric acid ester having 12-20 carbon atoms or a sulfuric acid metal salt is not good for emulsifier of this invention.

The initiator that is used in this process can be selected from either water-soluble or oil-soluble inorganic or organic peroxide compounds. The initiator is, for example such water-soluble initiator as potassium persulfate, sodium persulfate, ammonium persulfate, and the like and such oil-soluble initiator as cumene hydroperoxide, benzoyl peroxide, and the like. An amount of the polymer initiator used is preferably from 0.05 to 0.2 parts by weight, based on total monomer of 100 parts by weight.

The addition method of mixed monomer including the emulsifier in grafting reaction is preferably the continuous addition method. The batch addition method is not good for grafting because the pH of polymerization system rapidly increases and the internal structure of the particles becomes nonuniform because of a low stability.

As a modifier, a SAN tertially dodecyl mercaptan is used in this process and in an amount of from 0 to 0.2 parts by weight, based on total monomer of 100 parts by weight. It is preferable not to use an amount of the molecular weight modifier above 0.2 parts by weight, based on total monomer of 100 parts by weight, because of high reduction of impact strength.

The particle size of the polymerized rubber polymer latex is preferably from 250-500 nm (2500 to 5000 Å), more preferably from 300-450 nm (3000 to 4500 Å). The particle size of the polymerized rubber polymer latex is measured using dynamic lazer light scattering with Nicomp 370 HPL.

The invention is illustrated by the following examples and comparative examples.

EXAMPLE 1

The polymerizing process of composition of this invention includes following four steps.

The first step polymerization

The general procedure for the first step polymerization was as follows.
The following components were put into a 10 ℓ reactor, the temperature of the reactor was raised to 60°C and the components were reacted over 1.5 hour to produce the first step polymer.

| Composition | |
| --- | --- |
| Component | parts by weight |
| Water | 60.0 |
| Butylacrylate | 2.0 |
| Ethyleneglycot dimethacrylate | 0.01 |
| Sodium hydrogen carbonate | 0.05 |
| Potassium persulfate | 0.02 |
| (where the parts by weight of components is based on the total monomer of 100 parts by weight) | |

The second step polymerization

The general procedure for second polymerization was as follows.
After the following components except the potassium persulfate that was used as a catalyst were put into the reactor and mixed to make a mixture, the first step polymer and the potassium persulfate catalyst were added to the resulting mixture at a temperature of 70°C over 4 hours to produce a second step polymer.

| Composition | |
| --- | --- |
| Component | parts by weight |
| Water | 60.0 |
| Dioctyl sulfosuccinate | 0.3 |
| Butylacrylate | 27.0 |
| Acrylonitrile | 5.0 |
| Methyl methacrylate | 4.0 |
| Ethyleneglycol dimethacrylate | 0.01 |
| Allyl methacrylate | 0.02 |
| Sodium hydrogen carbonate | 0.2 |
| Potassium persulfate | 0.05 |
| (where the parts by weight of components is based on the total monomer of 100 parts by weight) | |

The third step polymerization

The general procedure for third polymerization was as follows.
The following components were added to the second step polymer and polymerization was performed at a temperature of 75°C over 1.5 hour to produce a third step polymer. The third step polymer had a particle size of about 350 nm (3500 Å) and a pH value of 0.8. The conversion rate of polymerization was 98.0 %.

| Composition | |
| --- | --- |
| Component | parts by weight |
| Water | 11.0 |
| Dioctyl sulfosuccinate | 0.2 |
| Butylacrylate | 11.0 |
| Ethyleneglycol dimethacrylate | 0.01 |

(continued)

| Composition | |
|---|---|
| Component | parts by weight |
| Allyl methacrylate | 0.02 |
| (where the parts by weight of components is based on the total monomer of 100 parts by weight) | |

The 4th step polymerization

The general procedure for 4th polymerization was as follows.

After all the following components except potassium persulfate that was used as a catalyst were mixed to make a mixture, the resulting mixture and the potassium persulfate catalyst were added to the third step polymer at a temperature of 75°C over 3 hours to produce a polymer latex. To increase the conversion of polymerization, the polymerization was performed at a temperature of 80°C for 1 more hour and then the resulting polymer latex was allowed to cool to 60°C.

| Composition | |
|---|---|
| Component | parts by weight |
| Water | 55.0 |
| Potassium acid rosinate | 0.3 |
| Potassium hydroxide(KOH) | 0.038 |
| Styrene(ST) | 42.0 |
| Acrylonitrile(AN) | 9.0 |
| Tertially dodecyl mercaptan(TDDM) | 0.03 |
| Potassium persulfate(KPS) | 0.2 |
| (where the parts by weight of components is based on the total monomer of 100 parts by weight) | |

A particle size of the polymerized latex was about 430 nm (4300 Å) and the latex had a pH value of 9.5. Conversion rate of polymerization was 99.1%.

After the obtained latex was coagulated under atmospheric pressure at a temperature of 85°C in an aqueous potassium chloride, it was dehydrated by aging and was washed. The water content of the wet powder was measured by sampling parts of the wet powder. The remaining wet powder was dried with hot air of 90°C for 30 minutes; and an ASA powder was obtained.

The water content of the wet powder was calculated as follows.

$$\text{Water content} = \left[ 1 - \frac{\text{weight of solid parts after drying}}{\text{weight of solid parts after dehyration}} \times 100 \right]$$

After the particles of the obtained ASA powder in an amount of 55.5 parts by weight and the SAN resin(LG chemistry 81 HF) having about 90,000-110,000 MW and AN content in an amount of 24 parts by weight were added to a mixer, the resulting mixture was pelletized by using a 40 π. extruder and small sample for measuring physical properties was obtained by using an injection unit.

The conditions for measuring the physical properties are as follows.

Izod impact strength: ASTM D 256 [6.35 mm (1/4 inch) notched at 25 °C, 9.81 J/m (kg cm/cm)].

Mobility : ASTM D1258(at 220°C and 10 kg/cm$^2$, g/10 minutes)

EXAMPLE 2

The same first step polymerization was performed as in Example 1. The components of the second and third step polymerization in Example 1 were mixed and added to the first step polymer. The resulting mixture was polymerized by the 4th step polymerization in Example 1.

EXAMPLE 3

The same polymerization was performed as in Example 1 except TAIC was used instead of EDMA.

EXAMPLE 4

The same polymerization was performed as in Example 1 except CHP was used instead of KPS as a catalyst.

EXAMPLE 5

The same polymerization was performed as in Example 1 except acrylonitrile and methyl methacrylate were added to the 4th step polymerization.

EXAMPLE 6

The same polymerization was performed as in Example 1 except the same amount of potassium fattic acid was used instead of potassium rosinate in the 4th step polymerization of Example 1.

EXAMPLE 7

The same polymerization was performed as in Example 1 except acrylonitrile in an amount of 1 parts by weight was used in the 2nd step and acrylonitrile in an amount of 17 parts by weight was used in the 4th step polymerization of example 1.

The results of the physical properties and final evaluations that are determined from the above-mentioned properties are shown in Table 1.

## TABLE 1

| Example No. | 1 | 2 | 3 | 4 | 5 | 6 | 7 |
|---|---|---|---|---|---|---|---|
| Particle size of latex of rubber polymer, Å (1 Å = 0.1 nm) | 3500 | 3600 | 3600 | 3100 | 3100 | 3250 | 2970 |
| Particle size of final latex, Å (1 Å = 0.1 nm) | 4300 | 4510 | 3800 | 3700 | 3840 | 4200 | 3700 |
| Water content of wet powder, % | 43 | 45 | 42 | 38 | 40 | 42 | 43 |
| State of coagulation under atmospheric pressure | Good | Good | Good | Good | Good | Good | Good |
| Impact strength, kg cm/cm (1 kg cm/cm = 9,81 J/m) | 32 | 27 | 25 | 20 | 13 | 23 | 18 |
| Mobility, g/10min at 220℃ | 13 | 10 | 12 | 15 | 9 | 11 | 10 |
| Evaluation | ⊙ | ⊙ | ⊙ | ⊙ | △ | ⊙ | △ |

( where ⊙ means the polymer that has a good improvement and △ means the polymer that has a little improvement)

COMPARATIVE EXAMPLE 1

The same polymerization was performed as in Example 1 except sodium lauryl sulfate was used instead of dioctyl sulfosuccinate in the 2nd and 3rd step, and sodium lauryl sulfate was used in an amount of 0.5 parts by weight instead of potassium rosinate in the 4th step polymerization of Example 1.

COMPARATIVE EXAMPLE 2

The same polymerization was performed as in Example 1 except potassium rosinate was used instead of dioctyl sulfosuccinate in the 2nd and 3rd step polymerization of Example 1.

COMPARATIVE EXAMPLE 3

The same polymerization was performed as in Example 1 except acrylonitrile was used in the 2nd step in the 4th step polymerization and styrene was used in an amount of 46 parts by weight in 4th step polymerization.
The results of the physical properties and final evaluations that are determined from the above-mentioned properties are shown in Table 2.

TABLE 2

| Comparative Example No. | 1 | 2 | 3 |
|---|---|---|---|
| Particle size of latex of rubber polymer, Å (1 Å=0.1 nm) | 2950 | 3260 | 3580 |
| Particle size of final latex, Å (1 Å = 0.1 nm) | 3760 | 4800 | 3770 |
| Water content of wet powder, % | 65 | 35 | 50 |
| State of coagulation under atmospheric pressure | Bad | Good | Ordinary |
| Impact strength, kg cm/cm (1 kg cm/cm = 9,81 J/m) | 11 | 3.5 | 12 |
| Mobility, g/10 min at 220°C | 9 | 32 | 11 |
| Evaluation | x | x | x |
| (where x indicates a polymer that is not suitable for the subject of this invention). | | | |

**Claims**

1. A process of preparing acrylate styrene acrylonitrile(ASA) resin containing monomers, aromatic vinyl compounds and cyanized vinyl compounds in an amount of from 30 to 50, from 30 to 60 and from 10 to 20 parts by weight respectively, based on total composition of ASA resins in an amount of 100 parts by weight comprising the steps of:

   a) preparing alkyl acrylate rubber polymers by simultaneously copolymerizing alkyl acrylate monomer, methyl methacrylate(MMA) and acrylonitrile(AN) in an amount of from 30 to 50, from 0.1 to 4 and from 0.1 to 6 parts by weight respectively, based on total composition of the ASA resin in an amount of 100 parts by weight; and
   b) grafting aromatic vinyl compounds and cyanized vinyl compounds to alkyl acrylate rubber polymers in an amount of from 40 to 60 parts by weight respectively, based on total composition of the ASA resin in an amount of 100 parts by weight.

2. The process according to claim 1, wherein adding such emulsifiers in step b) as alkyl sulfosuccinate metal salts having 12-18 carbon atoms, alkyl sulfuric acid esters and sulfonic acid metal salts.

3. The process according to claim 2, wherein the emulsifier is added in an amount of from 0.2 to 1.0 parts by weight, based on total monomers of the ASA resins in an amount of 100 parts by weight.

4. The process according to claim 1, wherein the acrylate rubber polymer has a particle size of 250-500 nm (2500-5000 Å) and a pH value of 5-9.

5. The process according to claim 1, wherein the ASA resin has a particle size of 300-600 nm (3000-6000 Å) and a pH value of 8-11.

6. The process according to claim 1, wherein the emulsifier of step b) is a rosinic acid metal salt or a carboxylic acid metal salt having 12-20 carbon atoms.

7.  The process according to claim 6, wherein the emulsifier is in an amount of from 0.5 to 3.0 parts by weight, based on total monomers of the ASA resin in an amount of 100 parts by weight

8.  A composition of acrylate styrene acrylonitrile (ASA) resins obtainable by grafting the following compounds:

    a) alkyl acrylate rubber polymers prepared by simultaneously copolymerizing alkyl acrylate monomer, methyl methacrylate(MMA) and acrylonitrile(AN) in an amount of from 30 to 50, from 0.1 to 4 and from 0.1 to 6 parts by weight respectively, based on total composition of the ASA resin in an amount of 100 parts by weight;
    b) aromatic vinyl compound in an amount of from 40 to 60 parts by weight, based on total composition of the ASA resin in an amount of 100 parts by weight;
    c) cyanized vinyl compound in an amount of from 10 to 20 parts by weight, based on total composition of the ASA resin in an amount of 100 parts by weight.

9.  The process according to claim 8, wherein the alkyl acrylate is butyl acrylate.

10. The process according to claim 8, wherein the methacrylate is methyl ester of methacrylate.

11. The process according to claim 8, wherein the aromatic vinyl compound is styrene.

12. The process according to claim 8, wherein the cyanized vinyl compound is acrylonitrile.


**Patentansprüche**

1.  Verfahren zur Herstellung eines Acrylat-Styrol-Acrylnitril (ASA)-Harzes, das Monomere, aromatische Vinyl-Verbindungen und cyanisierte Vinyl-Verbindungen in einer Menge von 30 bis 50, von 30 bis 60 bzw. von 10 bis 20 Gewichtsteilen, bezogen auf die Gesamtzusammensetzung der ASA-Harze in einer Menge von 100 Gewichtsteilen, enthält und die folgenden Schritte umfasst:

    a) Herstellung von Alkylacrylat-Kautschuk-Polymeren durch gleichzeitige Copolymerisation von Alkylacrylat-Monomer, Methylmethacrylat (MMA) und Acrylnitril (AN) in einer Menge von 30 bis 50, von 0,1 bis 4 bzw. von 0,1 bis 6 Gewichtsteilen, bezogen auf die Gesamtzusammensetzung des ASA-Harzes in einer Menge von 100 Gewichtsteilen, und
    b) Pfropfen aromatischer Vinyl-Verbindungen und cyanisierter Vinyl-Verbindungen auf Alkylacrylat-Kautschuk-Polymere in einer Menge von jeweils 40 bis 60 Gewichtsteilen, bezogen auf die Gesamtzusammensetzung des ASA-Harzes in einer Menge von 100 Gewichtsteilen.

2.  Verfahren gemäß Anspruch 1, wobei solche Emulgatoren wie Alkylsulfosuccinat-Metallsalze mit 12 bis 18 Kohlenstoffatomen, Alkylschwefelsäureester und Sulfonsäure-Metallsalze im Schritt b) zugegeben werden.

3.  Verfahren gemäß Anspruch 2, wobei der Emulgator in einer Menge von 0,2 bis 1,0 Gewichtsteilen, bezogen auf die gesamten Monomere der ASA-Harze in einer Menge von 100 Gewichtsteilen, zugegeben wird.

4.  Verfahren gemäß Anspruch 1, wobei das Acrylat-Kautschuk-Polymer eine Teilchengröße von 250 - 500 nm (2500 - 5000 Å) und einen pH-Wert von 5 bis 9 aufweist.

5.  Verfahren gemäß Anspruch 1, wobei das ASA-Harz eine Teilchengröße von 300 - 600 nm (3000 - 6000 Å) und einen pH-Wert von 8 bis 11 aufweist.

6.  Verfahren gemäß Anspruch 1, wobei der Emulgator des Schritts b) ein Harzsäure-Metallsalz oder ein Carbonsäure-Metallsalz mit 12 bis 20 Kohlenstoffatomen ist.

7.  Verfahren gemäß Anspruch 6, wobei der Emulgator in einer Menge von 0,5 bis 3,0 Gewichtsteilen, bezogen auf die gesamten Monomere des ASA-Harzes in einer Menge von 100 Gewichtsteilen, vorliegt.

8.  Zusammensetzung von Acrylat-Styrol-Acrylnitril (ASA)-Harzen, die durch Pfropfen der folgenden Verbindungen erhältlich ist:

a) von Alkylacrylat-Kautschuk-Polymeren, die durch gleichzeitige Copolymerisation von Alkylacrylat-Monomer, Methylmethacrylat (MMA) und Acrylnitril (AN) in einer Menge von 30 bis 50, von 0,1 bis 4 bzw. von 0,1 bis 6 Gewichtsteilen, bezogen auf die Gesamtzusammensetzung des ASA-Harzes in einer Menge von 100 Gewichtsteilen, hergestellt werden;
b) einer aromatischen Vinyl-Verbindung in einer Menge von 40 bis 60 Gewichtsteilen, bezogen auf die Gesamtzusammensetzung des ASA-Harzes in einer Menge von 100 Gewichtsteilen;
c) einer cyanisierten Vinyl-Verbindung in einer Menge von 10 bis 20 Gewichtsteilen, bezogen auf die Gesamtzusammensetzung des ASA-Harzes in einer Menge von 100 Gewichtsteilen.

9. Verfahren gemäß Anspruch 8, in dem das Alkylacrylat Butylacrylat ist.

10. Verfahren gemäß Anspruch 8, in dem das Methacrylat der Methylester von Methacrylat ist.

11. Verfahren gemäß Anspruch 8, in dem die aromatische Vinyl-Verbindung Styrol ist.

12. Verfahren gemäß Anspruch 8, in dem die cyanisierte Vinyl-Verbindung Acrylnitril ist.

**Revendications**

1. Procédé de préparation d'une résine acrylate-styrène-acrylonitrile (ASA) contenant des monomères, des composés vinyliques aromatiques et des composés vinyliques cyanisés en une quantité de 30 à 50, de 30 à 60 et de 10 à 20 parties en poids respectivement, rapportée à une quantité de la composition totale de résines ASA de 100 parties en poids, ledit procédé comprenant les étapes qui consistent à :

a) préparer des polymères caoutchouc acrylate d'alkyle en copolymérisant simultanément un monomère acrylate d'alkyle, du méthacrylate de méthyle (MMA) et de l'acrylonitrile (AN) en une quantité de 30 à 50, de 0,1 à 4 et de 0,1 à 6 parties en poids respectivement, rapportée à une quantité de la composition totale de la résine ASA de 100 parties en poids ; et
b) greffer des composés vinyliques aromatiques et des composés vinyliques cyanisés à des polymères caoutchouc acrylate d'alkyle en une quantité de 40 à 60 parties en poids respectivement, rapportée à une quantité de la composition totale de la résine ASA de 100 parties en poids.

2. Procédé selon la revendication 1, dans lequel on ajoute à l'étape b) des émulsifiants, tels que des sels de métaux de type sulfosuccinate d'alkyle ayant de 12 à 18 atomes de carbone, des esters d'acide alkylsulfurique et des sels de métaux de l'acide sulfonique.

3. Procédé selon la revendication 2, dans lequel l'émulsifiant est ajouté en une quantité de 0,2 à 1,0 partie en poids, rapportée à une quantité des monomères totaux des résines ASA de 100 parties en poids.

4. Procédé selon la revendication 1, dans lequel le polymère caoutchouc acrylate a une taille de particule de 250 à 500 nm (2500 à 5000 Å) et une valeur de pH de 5 à 9.

5. Procédé selon la revendication 1, dans lequel la résine ASA a une taille de particule de 300 à 600 nm (3000 à 6000 Å) et une valeur de pH de 8 à 11.

6. Procédé selon la revendication 1, dans lequel l'émulsifiant de l'étape b) est un sel de métal de l'acide résinique ou un sel de métal de l'acide carboxylique ayant de 12 à 20 atomes de carbone.

7. Procédé selon la revendication 6, dans lequel l'émulsifiant est en une quantité de 0,5 à 3,0 parties en poids, rapportée à une quantité des monomères totaux de la résine ASA de 100 parties en poids.

8. Composition de résines acrylate-styrène-acrylonitrile (ASA) que l'on peut obtenir en greffant les composés suivants :

a) des polymères caoutchouc acrylate d'alkyle préparés en copolymérisant simultanément un monomère acrylate d'alkyle, du méthacrylate de méthyle (MMA) et de l'acrylonitrile (AN) en une quantité de 30 à 50, de 0,1 à 4 et de 0,1 à 6 parties en poids respectivement, rapportée à une quantité de la composition totale de la résine ASA de 100 parties en poids ;

b) un composé vinylique aromatique en une quantité de 40 à 60 parties en poids, rapportée à une quantité de la composition totale de la résine ASA de 100 parties en poids;

c) un composé vinylique cyanisé en une quantité de 10 à 20 parties en poids, rapportée à une quantité de la composition totale de la résine ASA de 100 parties en poids.

9. Procédé selon la revendication 8, dans lequel l'acrylate d'alkyle est de l'acrylate de butyle.

10. Procédé selon la revendication 8, dans lequel le méthacrylate est un ester méthylique de méthacrylate.

11. Procédé selon la revendication 8, dans lequel le composé vinylique aromatique est du styrène.

12. Procédé selon la revendication 8, dans lequel le composé vinylique cyanisé est de l'acrylonitrile.